# EUROPÄISCHE PATENTANMELDUNG

(11) **EP 4 282 548 A1**
(43) Veröffentlichungstag der Anmeldung: **29.11.2023**
(21) Anmeldenummer: 23174921.9
(22) Anmeldetag: 23.05.2023
(51) Int. Cl.: B08B 9/04, B65H 75/44, F16L 55/28, G01M 3/00, F16L 101/12, F16L 101/30, B08B 9/043, B08B 9/049, B08B 9/053

(54) **SYSTEM UND VERFAHREN ZUR REINIGUNG UND/ODER INSPEKTION EINER ROHRLEITUNG**

(30) Priorität: 24.05.2022 DE 102022205189
(71) Anmelder: Envirobot GmbH & Co. KG, 87463 Dietmannsried (DE)
(72) Erfinder: MATT, Frank, 87463 Dietmannsried (DE)
(74) Vertreter: Isarpatent

(57) **Zusammenfassung**

System (100) zur Reinigung und/oder Inspektion einer Rohrleitung (D), aufweisend einen Schlauch (1); eine mit einem Ende (1A) des Schlauchs (1) verbundene Arbeitsvorrichtung (2) zur Durchführung der Reinigung und/oder Inspektion mit einer Sensoreinrichtung (3), dazu eingerichtet, eine Bewegungsrichtung (X1, X2) der Arbeitsvorrichtung (2) in der Rohrleitung (D) repräsentierende Sensordaten zu erfassen; eine Schlauchtrommel (4), auf welche der Schlauch (1) auf- und abwickelbar ist; umfassend Motor (5), welcher dazu ausgebildet ist, die Schlauchtrommel (4) zu drehen und eine Steuerungsvorrichtung (6), welche mit der Arbeitsvorrichtung (2) und dem Motor (5) signalleitend verbunden und dazu eingerichtet ist: basierend auf den Sensordaten die Bewegungsrichtung (X1, X2) der Arbeitsvorrichtung (2) in der Rohrleitung (D) zu ermitteln und ein erstes Steuersignal an den Motor (5) auszugeben, welches den Motor (5) dazu veranlasst, die Schlauchtrommel (4) zum Aufwickeln des Schlauchs (1) in einer ersten Drehrichtung zu drehen, wenn die ermittelte Bewegungsrichtung der Arbeitsvorrichtung (2) einer vorbestimmten ersten Bewegungsrichtung (X1) entspricht.

## Beschreibung

### Technisches Gebiet

Die vorliegende Erfindung betrifft ein System zur Reinigung und/oder Inspektion einer Rohrleitung und ein Verfahren zur Durchführung einer Reinigung und/oder Inspektion einer Rohrleitung.

### Stand der Technik

Zur Reinigung und Inspektion von für Menschen unzugänglichen Rohren, Schächten und Kanälen, allgemeiner auch als Rohrleitungen bezeichnet, werden typischerweise kombinierte Reinigungs- und Inspektionssysteme verwendet. Die Reinigungssysteme weisen in der Regel einen Schlauch, insbesondere einen Betriebsmittelschlauch zum Durchleiten eines Reinigungsfluids oder Betriebs- bzw. Arbeitsfluids, z.B. Wasser, auf. Das Betriebsfluid kann z.B. mit hohem Druck zu einer mit dem Schlauch verbundenen Düse (z. B. eine Reinigungsdüse) geleitet und durch die Düse (z. B. Reinigungsdüse) in die Rohrleitung ausgestoßen werden, z.B. um Verschmutzungen oder Verstopfungen zu beseitigen. Die Inspektionssysteme weisen üblicherweise eine Inspektions- oder Sensoreinrichtung, wie z.B. eine Kamera, auf.

Der Schlauch ist in der Regel auf eine Schlauchtrommel aufgewickelt. Zum Einführen des Schlauchs in die Rohrleitung wird der Schlauch von der Schlauchtrommel abgewickelt, was zumeist manuell erfolgt. Ein Aufwickeln des Schlauchs auf die Schlauchtrommel erfolgt normalerweise mithilfe eines Motors, z.B. um den Schlauch aus der Rohrleitung herauszuziehen.

Von einem Motor angetriebenen Schlauchtrommeln sind z.B. in der US 5 139 751 A, der US 9 683 360 B1 oder der US 2012/0305031 A1 offenbart.

In der WO 2018/031471 A2 wird ein System zur Inspektion und Reinigung von Rohrleitungen beschrieben, in dem eine Reinigungsvorrichtung an einem Ende eines Vorschubkabels angeordnet ist, wobei das Vorschubkabel von einer Trommel abgewickelt und mittels eines Vorschubmechanismus in das Rohr eingeführt wird.

Die EP 2 258 648 A1 und die US 2016/311643 A1 beschreiben eine durch einen Elektromotor angetriebene Spule zum Aufwickeln eines Schlauchs. Das Aufwickeln wird durch das Ziehen des Schlauchs manuell initiiert und mithilfe des Motors durchgeführt.

### Offenbarung der Erfindung

Der vorliegenden Erfindung liegt die Aufgabe zugrunde, verbesserte Lösungen für Reinigungs- und/oder Inspektionssysteme von Rohrleitungen bereitzustellen, insbesondere solche Lösungen, bei denen die Handhabung des Schlauchs erleichtert wird.

Diese Aufgabe wird gelöst durch ein System mit den Merkmalen des Anspruchs 1 und ein Verfahren mit den Merkmalen des Anspruchs 14.

Nach einem ersten Aspekt der Erfindung umfasst ein System zur Reinigung und/oder Inspektion einer Rohrleitung einen Schlauch, eine mit einem Ende des Schlauchs verbundene Arbeitsvorrichtung zur Durchführung der Reinigung und/oder Inspektion mit einer Sensoreinrichtung, die dazu eingerichtet ist, eine Bewegungsrichtung der Arbeitsvorrichtung in der Rohrleitung repräsentierende Sensordaten zu erfassen, eine Schlauchtrommel, auf welche der Schlauch aufwickelbar und von welcher der Schlauch abwickelbar ist, einen an die Schlauchtrommel gekoppelten Motor, welcher dazu ausgebildet ist, die Schlauchtrommel in einer ersten Drehrichtung zu drehen, um den Schlauch auf die Schlauchtrommel aufzuwickeln, und eine Steuerungsvorrichtung, welche mit der Arbeitsvorrichtung und dem Motor signalleitend verbunden und dazu eingerichtet ist: basierend auf den Sensordaten die Bewegungsrichtung der Arbeitsvorrichtung in der Rohrleitung zu ermitteln und ein erstes Steuersignal an den Motor auszugeben, welches den Motor dazu veranlasst, die Schlauchtrommel zum Aufwickeln des Schlauchs in der ersten Drehrichtung zu drehen, wenn die ermittelte Bewegungsrichtung der Arbeitsvorrichtung einer vorbestimmten ersten Bewegungsrichtung entspricht.

Nach einem zweiten Aspekt der Erfindung ist ein Verfahren zum Inspizieren und/oder Reinigen einer Rohrleitung vorgesehen. Das Verfahren umfasst ein Einführen einer an einem Ende eines Schlauchs angebrachten Arbeitsvorrichtung in die Rohrleitung, wobei der Schlauch von einer Schlauchtrommel abgewickelt wird, ein Reinigen und/oder Inspizieren der Rohrleitung mittels der Arbeitsvorrichtung, ein Erfassen einer Bewegungsrichtung der Arbeitsvorrichtung mittels einer Sensoreinrichtung der Arbeitsvorrichtung, ein Ändern einer Bewegungsrichtung der Arbeitsvorrichtung, um den Schlauch mit der Arbeitsvorrichtung in einer ersten Bewegungsrichtung aus der Rohrleitung herauszuziehen, und ein automatisches Drehen der Schlauchtrommel mittels eines Motors derart, dass der Schlauch auf die Schlauchtrommel aufgewickelt wird, um die Arbeitsvorrichtung und den Schlauch aus der Rohrleitung herauszuziehen, wenn (oder: als Reaktion darauf, dass) die Sensoreinrichtung als Bewegungsrichtung die erste Bewegungsrichtung erfasst.

Das Verfahren nach dem zweiten Aspekt der Erfindung kann insbesondere mit dem System nach dem ersten Aspekt der Erfindung durchgeführt werden. Die hierin im Zusammenhang mit dem System offenbarten Merkmale und Vorteile sind daher auch für das Verfahren offenbart und umgekehrt. Insbesondere kann die Steuerungsvorrichtung des Systems dazu ausgebildet sein, das System zur Ausführung des Verfahrens zu veranlassen.

Eine der Erfindung zugrundeliegende Idee besteht darin, dass ein Aufwickeln des Schlauchs auf die Schlauchtrommel mittels des Motors basierend auf der Bewegungsrichtung der Arbeitsvorrichtung initiiert wird. Die Arbeitsvorrichtung, die an einem Ende des Schlauchs angebracht und mit einer Sensoreinrichtung ausgerüstet ist, ist mit einer Steuerungsvorrichtung signalleitend verbunden, die ein entsprechendes Steuersignal den Motor ausgibt, wenn eine erste Bewegungsrichtung erfasst wird. Eine Bewegung der Arbeitsvorrichtung in der ersten Bewegungsrichtung (oder: Rückwärtsrichtung) kann z.B. dadurch bewirkt werden, dass ein Benutzer an dem Schlauch zieht. Der Motor kann z.B. ein elektrischer Motor sein.

Das System erlaubt vorteilhaft eine einfache Durchführung eines Verfahrens zum Reinigen und/oder Inspizieren einer Rohrleitung. Hierbei wird zunächst das Ende des Schlauchs mit der Arbeitsvorrichtung in der Rohrleitung eingeführt, wobei der Schlauch von der Schlauchtrommel abgewickelt wird, um das Reinigen und/oder Inspizieren der Rohrleitung durchzuführen. Das Abwickeln kann optional motorisch unterstützt oder ohne motorische Unterstützung erfolgen. Weiterhin erfassen die Sensoren in dem Arbeitskopf bzw. der Arbeitsvorrichtung die Bewegung des Arbeitskopfes und übertragen die entsprechenden Daten an die Steuerungsvorrichtung. Die Bewegung des Arbeitskopfes in das Rohr hinein entspricht einer Bewegung in einer zweiten Bewegungsrichtung (oder: Vorwärtsrichtung). Die Datenverarbeitung erfolgt in der Steuerungsvorrichtung. Wenn die Arbeitsvorrichtung wieder aus dem Rohr herausgezogen wird, was z.B. manuell initiiert werden kann, entspricht dies einer Bewegung der Arbeitsvorrichtung in der ersten Bewegungsrichtung und die Steuerungsvorrichtung gibt ein Steuerungssignal an den Motor aus. Dementsprechend wird die Schlauchtrommel vom Motor angetrieben und der Schlauch wird aufgewickelt.

Ein Vorteil der Erfindung liegt darin, dass die Sensoreinrichtung, eine kontinuierliche Erfassung der Bewegungsrichtung der Arbeitsvorrichtung ermöglicht. Wenn die Bewegungsrichtung des Schlauchs bzw. der Arbeitsvorrichtung in der ersten Bewegungsrichtung erfasst wird, z. B. wenn an dem Schlauch gezogen wird, erfolgt das Initiieren des Aufwickelns des Schlauchs mithilfe des Motors automatisch, d.h. ohne zwangsläufig eine Betätigungseinrichtung, wie z.B. ein Knopf, manuell betätigen zu müssen. Damit wird die Handhabung des Schlauchs erleichtert, wodurch die Reinigung und/oder Inspektion von Rohrleitungen auch schneller erfolgen kann. Ein weiterer Vorteil liegt darin, dass die Sensoren in der Arbeitsvorrichtung untergebracht sind und damit auch für andere Zwecke eingesetzt werden können, z.B. zu Inspektions- und/oder Navigationszwecken. Ferner ist vorteilhaft, dass das Aufwickeln nicht nur automatisch initiiert wird, sondern auch zwangsläufig dann erfolgt, wenn der Schlauch bzw. der Arbeitskopf in der ersten Bewegungsrichtung, also aus dem Rohr heraus bewegt wird. Dadurch wird einerseits ein Herumliegen von nicht aufgewickeltem Schlauch vermieden und die Gefahren, die durch nicht aufgewickelte Schläuche entstehen können, wie z.B. durch Stolpern, werden verringert. Andererseits kann die gegebenenfalls durch einen Encoder an der Schlauchtrommel erfasste abgewickelte Schlauchlänge genauer erfasst werden.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß manchen Ausführungsformen kann vorgesehen sein, dass die erste Bewegungsrichtung einer Bewegung der Arbeitsvorrichtung in der Rohrleitung zu einer Öffnung hin entspricht, durch welche der Schlauch in die Rohrleitung eingeführt wird. Die erste Bewegungsrichtung entspricht somit einem Herausziehen des Schlauchs aus der Rohrleitung.

Gemäß manchen Ausführungsformen kann vorgesehen sein, dass der Motor dazu ausgebildet ist, die Schlauchtrommel in einer zweiten Drehrichtung zu drehen, um den Schlauch von der Schlauchtrommel abzuwickeln, wobei die Steuerungsvorrichtung dazu eingerichtet ist ein zweites Steuersignal an den Motor auszugeben, welches den Motor dazu veranlasst, die Schlauchtrommel zum Abwickeln des Schlauchs in der zweiten Drehrichtung zu drehen, wenn die ermittelte Bewegungsrichtung der Arbeitsvorrichtung einer vorbestimmten zweiten Bewegungsrichtung entspricht. Das Verfahren kann entsprechend zusätzlich ein Bewegen der Arbeitsvorrichtung in der zweiten Bewegungsrichtung umfassen, z.B. beim Einführen der Arbeitsvorrichtung in die Rohrleitung, und ein Drehen der Schlauchtrommel mittels des Motors derart, dass der Schlauch von der Schlauchtrommel abgewickelt wird, wenn die Sensoreinrichtung als Bewegungsrichtung die zweite Bewegungsrichtung erfasst.

Gemäß manchen Ausführungsformen kann vorgesehen sein, dass die zweite Bewegungsrichtung einer Bewegung der Arbeitsvorrichtung in Richtung von einer Öffnung weg entspricht, durch welche der Schlauch in die Rohrleitung eingeführt wird. Die zweite Bewegungsrichtung entspricht somit einem Einführen des Schlauchs in das Rohr. Somit kann nicht nur das Aufwickeln, sondern auch das Abwickeln des Schlauchs über die Bewegung der Arbeitsvorrichtung gesteuert werden. Das kann insbesondere zu einer sehr effektiven Handhabung des Schlauchs führen, ohne den Motor manuell umschalten zu müssen.

Gemäß manchen Ausführungsformen kann vorgesehen sein, dass die Sensoreinrichtung dazu eingerichtet ist, eine Bewegungsgeschwindigkeit der Arbeitsvorrichtung in der Rohrleitung repräsentierende Sensordaten zu erfassen, wobei die Steuerungsvorrichtung dazu eingerichtet ist, basierend auf den Sensordaten eine Änderung der Bewegungsgeschwindigkeit der Arbeitsvorrichtung in der Rohrleitung zu ermitteln und ein drittes Steuersignal an den Motor auszugeben, welches den Motor dazu veranlasst, die Drehung der Schlauchtrommel zu stoppen, wenn die ermittelte Bewegungsgeschwindigkeit der Arbeitsvorrichtung kleiner einem vorbestimmten Schwellwert liegt. Gemäß manchen Ausführungsformen kann das Verfahren dementsprechend ein Ändern der Bewegungsgeschwindigkeit der Arbeitsvorrichtung umfassen, so dass die Arbeitsvorrichtung unter einen vorbestimmten Geschwindigkeitsschwellwert abgebremst wird, und ein Stoppen der Drehung der Schlauchtrommel mittels des Motors, wenn die Sensoreinrichtung die Bewegungsgeschwindigkeit unter einem vorbestimmten Schwellwert erfasst. Dies erleichtert es z.B. in bestimmten Bereiche zu arbeiten, die intensiver gereinigt und/oder genauer inspiziert werden sollen, ohne den Motor manuell ausschalten zu müssen.

Gemäß manchen Ausführungsformen kann vorgesehen sein, dass die Sensoreinrichtung zumindest einen Beschleunigungssensor und/oder einen optischen Sensor aufweist. Beschleunigungssensoren und optische Sensoren bieten jeweils den Vorteil, dass deren Sensordaten auch für weitere Zwecke genutzt werden können, z.B. die optischen Sensoren zur Inspektion und die Beschleunigungssensoren zur Navigation oder Kartierung, z.B. mithilfe von Inertialmesseinheiten (IMUs).

Gemäß manchen Ausführungsformen kann vorgesehen sein, dass der optische Sensor ein bildgebender Sensor, insbesondere ein CMOS-Sensor, einer Kamera der Arbeitsvorrichtung ist, wobei der optische Sensor dazu eingerichtet ist, Bilddaten als Sensordaten auszugeben, und wobei die Steuerungsvorrichtung dazu eingerichtet ist, die Bewegungsrichtung anhand der vom bildgebenden Sensor ausgegebenen Bilddaten zu ermitteln. Diese Bilddaten könnten z.B. auf einem externen Bildschirm dargestellt werden und damit insbesondere helfen, eine Inspektion zu erleichtern oder eine kontinuierliche Überprüfung der Reinigung zu ermöglichen. Die Bilddaten können mithilfe von Bildverarbeitungssoftware durch die Steuerungsvorrichtung verarbeitet werden, um die Bewegungsrichtung und optional die Bewegungsgeschwindigkeit der Arbeitsvorrichtung zu ermitteln.

Gemäß manchen Ausführungsformen kann vorgesehen sein, dass die Sensoreinrichtung eine Lichtquelle aufweist, wobei der optische Sensor dazu ausgebildet ist, anhand von Licht, das von der Lichtquelle emittiert und von der Rohrleitung reflektiert wird, Bilddaten eines abstrahierten Bildes auszugeben, und wobei die Steuerungsvorrichtung dazu eingerichtet ist, die Bewegungsrichtung anhand der Bilddaten zu ermitteln. Das Bereitstellen von abstrahierten Bilddaten, z.B. von Schwarz-Weiß-Bildern mit geringer Auflösung, erleichtert vorteilhaft die Bildverarbeitung. Durch die Lichtquelle, welche z.B. als Laserlichtquelle oder als Leuchtdiode ausgeführt sein kann, werden vorteilhaft definierte Beleuchtungsbedingungen geschaffen und der Sensor kann kostengünstiger realisiert werden.

Gemäß manchen Ausführungsformen kann vorgesehen sein, dass die Steuerungsvorrichtung in der Arbeitsvorrichtung integriert ist, oder die Steuerungsvorrichtung separat von der Arbeitsvorrichtung ausgebildet ist. Im letztgenannten Fall kann die Steuerungsvorrichtung insbesondere im Motor integriert sein.

Gemäß manchen Ausführungsformen kann vorgesehen sein, dass die Steuerungsvorrichtung drahtgebunden, insbesondere anhand eines Datenbusses, oder drahtlos, insbesondere per Funk, z.B. mit der Sensoreinrichtung und/oder dem Motor verbunden ist. Das Funksignal kann z.B. in einem Frequenzband zwischen 450 und 550 Hz, z.B. bei 512 Hz, liegen. Bei einer drahtgebundenen Übertragung der Signale, sowohl von der Sensoreinrichtung an die Steuerungsvorrichtung als auch von dieser zum Motor, können die Signalleitungen in den Schlauch integriert sein, z.B. in einen Schlauchmantel.

Gemäß manchen Ausführungsformen kann vorgesehen sein, dass die Steuerungsvorrichtung einen Prozessor und einen Datenspeicher aufweist, welcher durch den Prozessor lesbar ist und eine Software speichert, die durch den Prozessor ausführbar ist, um das erste und optional das zweite und/oder das dritte Steuersignal auszugeben.

Gemäß manchen Ausführungsformen kann vorgesehen sein, dass der Schlauch zur Durchleitung eines Arbeitsfluids wie z.B. Wasser ausgebildet ist, wobei die Arbeitsvorrichtung Düsen zum Ausstoßen des Arbeitsfluids aufweist.

Gemäß manchen Ausführungsformen kann vorgesehen sein, dass die Düsen der Arbeitsvorrichtung derart ausgerichtet sind, dass durch Ausstoßen des Arbeitsfluids eine entgegen der ersten Bewegungsrichtung gerichtete Kraft auf die Arbeitsvorrichtung aufgebracht wird. Dadurch kann die Arbeitsvorrichtung innerhalb der Rohrleitung lediglich mithilfe der durch Ausstoßen des Arbeitsfluids erzeugten Kraft in das Rohr hineinbewegt werden, was dazu führt, dass die Handhabung des Schlauchs weiter erleichtert wird.

Gemäß manchen Ausführungsformen kann das Verfahren nach dem zweiten Aspekt der Erfindung außerdem ein automatisches Drehen der Schlauchtrommel mittels des Motors derart umfassen, dass der Schlauch von der Schlauchtrommel abgewickelt wird, wenn (oder: als Reaktion darauf, dass) die Sensoreinrichtung als Bewegungsrichtung die zweite Bewegungsrichtung erfasst. Die zweite Bewegungsrichtung kann insbesondere der ersten Bewegungsrichtung entgegengesetzt sein.

Die obigen Ausführungsformen, Ausgestaltungen und Weiterbildungen lassen sich, soweit sinnvoll, beliebig miteinander kombinieren. Weitere Ausgestaltungen, Weiterbildungen und Implementierungen der Erfindung umfassen auch nicht explizit genannte Kombinationen von zuvor oder im Folgenden bezüglich den Ausführungsbeispielen beschriebenen Merkmalen der Erfindung. Insbesondere wird der Fachmann dabei auch Einzelaspekte als Verbesserungen oder Ergänzungen zu den jeweiligen Grundformen der Erfindung hinzufügen. Weiterhin sind die im Zusammenhang mit dem System der Erfindung offenbarten Merkmale und Vorteile auch für das Verfahren offenbart und umgekehrt.

### Kurze Beschreibung der Zeichnungen

Weitere Merkmale und Vorteile der Erfindung werden nachfolgend anhand der Figuren erläutert. Dabei zeigen:
- Fig. 1: eine schematische Blockdarstellung eines Systems gemäß einem Ausführungsbeispiel der Erfindung;
- Fig. 2: ein schematisches Ablaufdiagramm eines Verfahrens gemäß einem Ausführungsbeispiel der Erfindung;

In den Figuren bezeichnen gleiche Bezugszeichen gleiche oder gleichartige Elemente. Die Zeichnungen sind nicht notwendigerweise maßstabsgetreu zu verstehen, können aber in einigen Ausführungsformen maßstabsgetreu verwendet werden. Nummerierungen von Verfahrensschritten dienen der besseren Verständlichkeit, implizieren aber nicht notwendiger Weise eine bestimmte Reihenfolge, sofern sich nicht inhaltlich etwas Anderes ergibt.

### Beschreibung von Ausführungsbeispielen

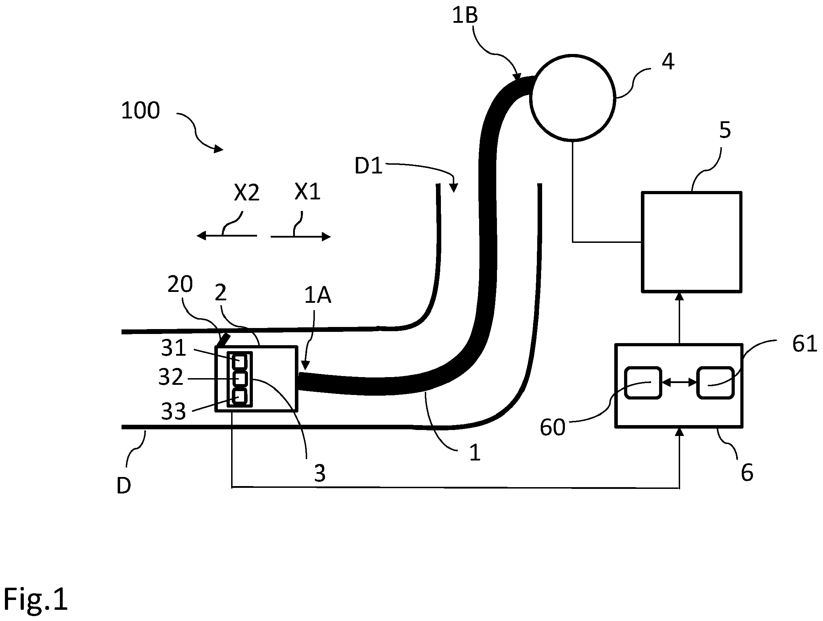

Fig. 1 zeigt rein beispielhaft ein System 100 zur Reinigung und/oder Inspektion von Rohrleitungen, welches einen Schlauch 1, eine Arbeitsvorrichtung 2, eine Sensoreinrichtung 3, eine Schlauchtrommel 4, einen Motor 5 und eine Steuerungsvorrichtung 6 umfasst.

Der Schlauch 1 ist zum Durchleiten eines Betriebsfluids oder Arbeitsfluids wie z.B. Wasser ausgebildet. Optional kann der Schlauch 1 elektrische Leitungen (nicht gezeigt) zum Durchleiten von elektrischen Signalen aufweisen. Der Schlauch 1 kann z.B. einen Innenschlauch (nicht dargestellt) aus einem flexiblen Kunststoffmaterial, z.B. aus einem Elastomermaterial, zum Durchleiten des Arbeitsfluids aufweisen. Weiterhin kann der Innenschlauch durch einen Außenschlauch oder Mantel umgeben sein, der aus einem abriebfesten, mechanisch widerstandsfähigen Material gebildet ist, z.B. Kevlar oder ähnliches. Die gegebenenfalls vorgesehenen elektrischen Leitungen können z.B. in den Mantel integriert oder zwischen Mantel und Innenschlauch angeordnet sein. Allgemein erstreckt sich der Schlauch 1 zwischen einem ersten Ende 1A und einem zweiten Ende 1B, das an der Schlauchtrommel 4 befestigt ist. Der Schlauch 1 kann z.B. eine Länge in einem Bereich zwischen 5 m und 100 m aufweisen.

Die Arbeitsvorrichtung 2 ist in Fig. 1 lediglich schematisch als Block dargestellt und ist zum Ausstoßen von Arbeitsfluid und/oder zum Durchführen von Inspektionsfunktionen ausgebildet. Wie in Fig. 1 schematisch gezeigt, kann die Arbeitsvorrichtung 2 z. B. mehrere Düsen 20 aufweisen, durch welche das Arbeitsfluid ausgestoßen werden kann. Wie in Fig. 1 beispielhaft gezeigt, können die Düsen 20 derart ausgerichtet sein, dass beim Ausstoßen des Arbeitsfluids eine Kraft auf die Arbeitsvorrichtung 2 aufgebracht wird, welche die Arbeitsvorrichtung 2 in der Rohrleitung D hineinschiebt. Wie in Fig. 1 schematisch dargestellt ist die Arbeitsvorrichtung 2 an dem ersten Ende 1A des Schlauchs 1 angeordnet und mit dem Schlauch 1 verbunden, insbesondere derart, dass eine fluidisch leitende Verbindung zwischen dem Schlauch 1 und den Düsen 20 besteht.

Die Sensoreinrichtung 3 ist schematisch in Fig. 1 dargestellt und kann mit einem oder mehreren Sensoren vorgesehen sein. In Fig. 1 umfasst die Sensoreinrichtung 3 beispielsweise einen Beschleunigungssensor 31 und einen optischen Sensor 32. Grundsätzlich kann aber auch nur ein Sensor vorgesehen sein. Allgemein ist die Sensoreinrichtung 3 dazu eingerichtet, eine Bewegungsrichtung X1, X2 und/oder Bewegungsgeschwindigkeit des Arbeitskopfs 2 repräsentierende Sensordaten zu erfassen und auszugeben. Beispielsweise kann der optische Sensor 32 ein bildgebender Sensor sein wie z.B. ein CMOS-Sensor von einer Kamera (nicht gezeigt), die Teil der Arbeitsvorrichtung 2 sein kann. Optional kann an der Arbeitsvorrichtung 2 auch eine Lichtquelle 33 vorgesehen sein, die Licht emittiert. Anhand des von der Rohrleitung D reflektierten Lichts kann der optische Sensor 32 Bilddaten eines Bildes erzeugen und ausgeben. Die von dem optischen Sensor 32 Bilddaten können beispielsweise an einem Display (nicht gezeigt) visualisiert werden, insbesondere wenn der optische Sensor 32 ein CMOS-Sensor oder ein anderer bildgebender Sensor ist. Wie in Fig.1 schematisch dargestellt ist die Sensoreinrichtung 3 an der Arbeitsvorrichtung 2 angebracht.

Die Schlauchtrommel 4 ist schematisch in Fig. 1 dargestellt. In der Regel kann die Schlauchtrommel 4 eine zylindrische Trägerstruktur aufweisen. Die Schlauchtrommel 4 kann z.B. an einer größeren Struktur wie z.B. an einem Kanalreinigungsfahrzeug oder an einem Anhänger angebaut sein. Der Schlauch 1 ist mit der Schlauchtrommel 4 verbunden und kann durch Drehen der Schlauchtrommel 4 in einer ersten Drehrichtung auf diese aufgewickelt und durch Drehen der Schlauchtrommel 4 in einer zweiten Drehrichtung von dieser abgewickelt werden.

Der Motor 5 ist schematisch in Fig. 1 dargestellt, und kann beispielsweise ein elektrischer Motor sein. Der Motor 5 dient dazu, die Schlauchtrommel 4 anzutreiben und ist hierzu kinematisch an diese gekoppelt, z.B. über ein Getriebe (nicht gezeigt). Der Motor 5 kann derart betrieben werden, dass er die Schlauchtrommel 4 in der ersten Drehrichtung dreht, um den Schlauch 1 von der Schlauchtrommel 4 aufzuwickeln. Optional kann der Motor 5 auch derart betrieben werden, dass er die Schlauchtrommel 4 in der zweiten Drehrichtung dreht, um den Schlauch 1 von der Schlauchtrommel 4 abzuwickeln.

Die Steuerungsvorrichtung 6 ist in Fig. 1 lediglich schematisch als Block dargestellt. Wie in Fig. 1 gezeigt, kann die Steuerungsvorrichtung 6 z.B. einen Prozessor 60 und einen Datenspeicher 61 aufweisen, der durch den Prozessor 60 lesbar ist. Der Prozessor 60 kann z.B. eine CPU, einen FPGA, einen ASIC oder andere Datenverarbeitungsstrukturen aufweisen. Der Datenspeicher 61 kann insbesondere ein nicht-flüchtiges Datenspeichermedium aufweisen, wie z.B. eine Festplatte, einen Flash-Speicher, einen SD-Speicher oder ähnliches. Die Steuerungsvorrichtung 6 ist allgemein dazu ausgebildet, basierend auf Eingangssignalen, z.B. in Form von Sensordaten, Ausgangssignale zu erzeugen, z.B. in Form von Steuersignalen.

Wie in Fig. 1 schematisch dargestellt, ist die Steuerungsvorrichtung 6 signalleitend mit der Sensoreinrichtung 3 und dem Motor 5 verbunden. Die Steuerungsvorrichtung 6 empfängt Sensordaten von der Sensoreinrichtung 3 und erzeugt basierend auf den Sensordaten entsprechende Steuerungssignale, welche sie an dem Motor 5 ausgibt um diesen zu betreiben. Beispielsweise kann der Datenspeicher 61 eine Software speichern, welche durch den Prozessor 60 ausführbar ist, um die Steuersignale basierend auf den Sensordaten zu erzeugen. Die signalleitende Verbindung zwischen der Steuerungsvorrichtung 6 mit dem Motor 5 und der Sensoreinrichtung 3 kann drahtlos oder drahtgebunden erfolgen. Die drahtgebundene Signalübertragung kann z.B. mithilfe eines Datenbusses erfolgen. Eine drahtlose Signalübertragung kann insbesondere per Funk, z.B. in einem Frequenzband zwischen 450 und 550 Hz, beispielsweise bei 512 Hz erfolgen. In der Fig. 1 sind die Steuerungsvorrichtung 6, die Arbeitsvorrichtung 2 und der Motor 5 als separate Vorrichtungen dargestellt. Es ist jedoch möglich, dass die Steuerungsvorrichtung 6 in den Motor 5 oder die Arbeitsvorrichtung 2 integriert ist.

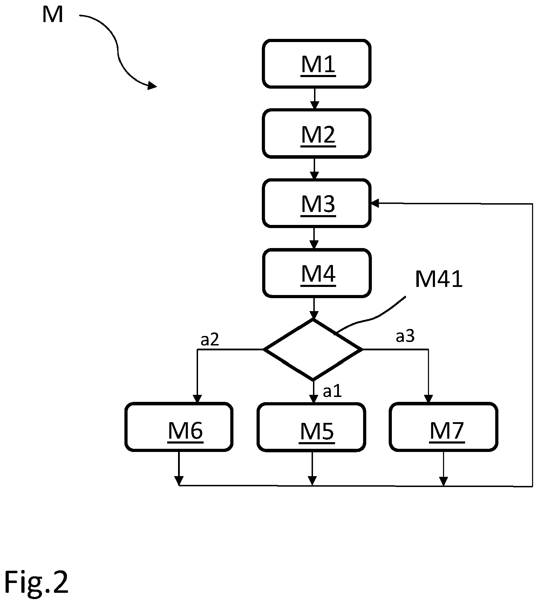

Fig. 2 zeigt rein beispielhaft den Ablauf eines Verfahrens M zum Inspizieren und/oder Reinigen einer Rohrleitung D. Das Verfahren M kann beispielsweise mithilfe des voranstehend erläuterten Systems 100 durchgeführt werden. Beispielsweise kann die Steuerungsvorrichtung 6 dazu ausgebildet sein, das System 100 zur Durchführung des Verfahrens M zu veranlassen. Insbesondere kann in dem Datenspeicher 61 Software gespeichert sein, die durch den Prozessor 60 ausführbar ist und den Prozessor 60 dazu veranlasst, das System 100 zur Ausführung der Schritte des Verfahrens M zu veranlassen. Im Folgenden wird das Verfahren M daher rein beispielhaft unter Bezugnahme auf das in den Fig. 1 gezeigten System 100 erläutert.

In einem ersten Schritt erfolgt ein Einführen M1 des Schlauchs 1 durch eine Öffnung D1 einer Rohrleitung D in diese hinein. Dieser Schritt kann z.B. manuell durchgeführt werden. Der Schlauch 1 wird hierzu von der Schlauchtrommel 4 abgezogen bzw. abgewickelt und mit der Arbeitsvorrichtung 2 voraus in die Rohrleitung D hineinbewegt.

Weiterhin erfolgt ein Reinigen und/oder Inspizieren M2 der Rohrleitung D mithilfe der Arbeitsvorrichtung 2. Beispielsweise kann die Arbeitsvorrichtung 2 während des Einführens (Schritt M1) des Schlauchs 1 in die Rohrleitung D ein Arbeitsfluid, z.B. Wasser, durch die verschiedenen Düsen 20 ausstoßen. Wenn die Düsen 20 (z. B. Reinigungsdüsen) ausgerichtet sind, wie unter Bezugnahme auf Fig. 1 beschrieben, unterstützt oder bewirkt die durch das Ausstoßen des Betriebsfluid erzeugte Kraft einen Vortrieb der Arbeitsvorrichtung 2 in der Rohrleitung D.

In Schritt M3 wird die Bewegungsrichtung X1, X2 der Arbeitsvorrichtung 2 mittels einer Sensoreinrichtung 3 erfasst. Dieses Erfassen M3 der Bewegungsrichtung X1, X2 der Arbeitsvorrichtung 2 kann zu einem vorbestimmten Zeitpunkt gestartet, z.B. gleichzeitig mit dem Beginn der Reinigung und/oder Inspektion (Schritt 2), gleichzeitig mit dem Einführen (Schritt M1) oder zu einem späteren Zeitpunkt. Die Sensoreinrichtung 3 erfasst in Schritt M3 somit Sensordaten, z.B. Beschleunigungsdaten oder Bilddaten, welche die Bewegungsrichtung X1, X2 und optional auch eine Bewegungsgeschwindigkeit der Arbeitsvorrichtung 2 repräsentieren. Diese Sensordaten werden an die Steuerungsvorrichtung 6 gesendet, welche daraus die Bewegungsrichtung X1, X2 und gegebenenfalls die Bewegungsgeschwindigkeit der Arbeitsvorrichtung 2 ermittelt. Während des Einführens (Schritt M1) und typischerweise auch während des Reinigens (Schritt M2) bewegt sich die Arbeitsvorrichtung 2 von der Öffnung D1 weg weiter hin das Rohr D hinein, was einer Bewegung in der zweiten Bewegungsrichtung X2 entspricht, was durch die Sensoreinrichtung 3 entsprechend erfasst wird.

In Schritt M4 wird die Bewegungsrichtung X1, X2 der Arbeitsvorrichtung 2 geändert. Beispielsweise kann die Bewegungsrichtung X1, X2 manuell geändert werden, indem der Benutzer/die Benutzerin an dem Schlauch 1 zieht bzw. anfängt, diesen aus der Rohrleitung D herauszuziehen. Dementsprechend wird die Arbeitsvorrichtung 2 in Richtung der Öffnung D1 der Rohrleitung D, in einer ersten Bewegungsrichtung X1 bewegt. Diese Bewegung wird durch die Sensoreinrichtung 3 erfasst und die Bewegungsrichtung X1 durch die Steuerungsvorrichtung 6 ermittelt.

In Schritt M41 führt die Steuerungsvorrichtung 6 einen Entscheidungsschritt durch, dessen Ergebnis von der ermittelten Bewegungsrichtung und gegebenenfalls von der ermittelten Bewegungsgeschwindigkeit abhängt. Wenn aufgrund der erfassten Sensordaten ermittelt wird, dass die Arbeitsvorrichtung 2 sich in der ersten Bewegungsrichtung X1 bewegt, z.B. nach der Änderung der Bewegungsrichtung in Schritt M4, wird als nächstes Schritt M5 ausgeführt, wie dies in Fig. 2 durch das Bezugszeichen a1 symbolisiert ist. In Schritt M5 gibt die Steuerungsvorrichtung 6 ein erstes Steuerungssignal an den Motor 5 aus, was den Motor 5 dazu veranlasst, die Schlauchtrommel 4 in der ersten Drehrichtung anzutreiben, um den Schlauch 1 aufzuwickeln. Dementsprechend werden die Arbeitsvorrichtung 2 und der Schlauch 1 aus der Rohrleitung D herausgezogen.

Wenn in Schritt M41 festgestellt wird, dass die erfasste Bewegungsrichtung der Arbeitsvorrichtung 2 der zweiten Bewegungsrichtung X2 entspricht, kann als nächstes Schritt M6 ausgeführt werden, wie dies in Fig. 2 durch das Bezugszeichen a2 angezeigt ist. In Schritt M6 gibt die Steuerungsvorrichtung 6 ein zweites Steuerungssignal an den Motor 5 aus, welches den Motor 5 dazu veranlasst, die Schlauchtrommel 4 in der zweiten Drehrichtung zu rotieren, um den Schlauch 1 abzuwickeln. Dementsprechend werden die Arbeitsvorrichtung 2 und der Schlauch 1 in die Rohrleitung D hinein bewegt.

Wenn in Schritt M41 ermittelt wird, dass die Bewegungsgeschwindigkeit der Arbeitsvorrichtung 2, die von der Sensoreinrichtung 3 erfasst wird, unter einem vorbestimmten Schwellwert liegt, kann das Verfahren M zu Schritt M7 übergehen, wie dies in Fig. 2 durch das Bezugszeichen a3 symbolisiert wird. In Schritt M7 gibt die Steuerungsvorrichtung 6 ein drittes Steuerungssignal an den Motor 5 aus, welches den Motor 5 dazu veranlasst, den Motor 5 die Drehung der Schlauchtrommel 4 zu stoppen.

Es kann vorgesehen sein, dass das Erfassen M3 der Bewegungsrichtung X1, X2 der Arbeitsvorrichtung 2 ständig während der Reinigung und/oder Inspektion erfolgt. Demzufolge erfolgt bei jeder neuen Änderung M4 der Bewegungsrichtung X1, X2 der Arbeitsvorrichtung 2 gegebenenfalls eine neue von dem Motor 5 angetriebene Drehung M5, M6 der Schlauchtrommel 4 oder ein Stoppen M7.

Die verschiedenen Schritte M3, M4, M5, M6 und M7 können daher während des Durchführens der Reinigung und/oder Inspektion (Schritt M2) mehrmals wiederholt werden. Insbesondere ist auch denkbar, dass während des Einführens M1 des Schlauchs 1 in die Rohrleitung D ein Reinigen der Rohrleitung D erfolgt und während Schritt M5, also während des Aufwickelns des Schlauchs 1 auf die Schlauchtrommel 4, eine Inspektion der Rohrleitung D erfolgt. Schritt M2 kann somit ebenfalls gleichzeitig zu Schritt M5 ausgeführt werden. Das Inspizieren (Schritt M2) kann beispielsweise ein Aufnehmen von Bilddaten mittels der Sensoreinrichtung 3 und, optional, ein Ausgeben der Bilddaten an einem Display (nicht gezeigt) umfassen.

Das System 100 realisiert mit einer von einem Motor 5 unterstützten Drehung einer Schlauchtrommel 4 somit eine verbesserte Lösung für die Reinigung und/oder Inspektion einer Rohrleitung D. Insbesondere wird die Handhabung des Schlauchs 1 erleichtert.

## Patentansprüche

1. System (100) zur Reinigung und/oder Inspektion einer Rohrleitung (D), aufweisend:
einen Schlauch (1);
eine mit einem Ende (1A) des Schlauchs (1) verbundene Arbeitsvorrichtung (2) zur Durchführung der Reinigung und/oder Inspektion mit einer Sensoreinrichtung (3), die dazu eingerichtet ist, eine Bewegungsrichtung (X1, X2) der Arbeitsvorrichtung (2) in der Rohrleitung (D) repräsentierende Sensordaten zu erfassen;
eine Schlauchtrommel (4), auf welche der Schlauch (1) aufwickelbar und von welcher der Schlauch (1) abwickelbar ist;
einen an die Schlauchtrommel (4) gekoppelten Motor (5), welcher dazu ausgebildet ist, die Schlauchtrommel (4) in einer ersten Drehrichtung zu drehen, um den Schlauch (1) auf die Schlauchtrommel (4) aufzuwickeln; und
eine Steuerungsvorrichtung (6), welche mit der Arbeitsvorrichtung (2) und dem Motor (5) signalleitend verbunden und dazu eingerichtet ist:
basierend auf den Sensordaten die Bewegungsrichtung (X1, X2) der Arbeitsvorrichtung (2) in der Rohrleitung (D) zu ermitteln und
ein erstes Steuersignal an den Motor (5) auszugeben, welches den Motor (5) dazu veranlasst, die Schlauchtrommel (4) zum Aufwickeln des Schlauchs (1) in der ersten Drehrichtung zu drehen, wenn die ermittelte Bewegungsrichtung der Arbeitsvorrichtung (2) einer vorbestimmten ersten Bewegungsrichtung (X1) entspricht.

2. System (100) nach Anspruch 1, wobei die erste Bewegungsrichtung (X1) einer Bewegung der Arbeitsvorrichtung (2) zu einer Öffnung (D1) hin entspricht, durch welche der Schlauch (1) in die Rohrleitung (D) eingeführt wird.

3. System (100) nach Anspruch 1 oder 2, wobei der Motor (5) dazu ausgebildet ist, die Schlauchtrommel (4) in einer zweiten Drehrichtung zu drehen, um den Schlauch (1) von der Schlauchtrommel (4) abzuwickeln, wobei die Steuerungsvorrichtung (6) dazu eingerichtet ist ein zweites Steuersignal an den Motor (5) auszugeben, welches den Motor (5) dazu veranlasst, die Schlauchtrommel (4) zum Abwickeln des Schlauchs (1) in der zweiten Drehrichtung zu drehen, wenn die ermittelte Bewegungsrichtung der Arbeitsvorrichtung (2) einer vorbestimmten zweiten Bewegungsrichtung (X2) entspricht.

4. System (100) nach Anspruch 3, wobei die zweite Bewegungsrichtung (X2) einer Bewegung der Arbeitsvorrichtung (2) in Richtung von einer Öffnung (D1) weg entspricht, durch welche der Schlauch (1) in die Rohrleitung (D) eingeführt wird.

5. System (100) nach einem der voranstehenden Ansprüche, wobei die Sensoreinrichtung (3) dazu eingerichtet ist, eine Bewegungsgeschwindigkeit der Arbeitsvorrichtung (2) in der Rohrleitung (D) repräsentierende Sensordaten zu erfassen, wobei die Steuerungsvorrichtung (6) dazu eingerichtet ist, basierend auf den Sensordaten eine Änderung der Bewegungsgeschwindigkeit der Arbeitsvorrichtung (2) in der Rohrleitung (D) zu ermitteln und ein drittes Steuersignal an den Motor (5) auszugeben, welches den Motor (5) dazu veranlasst, die Drehung der Schlauchtrommel (4) zu stoppen, wenn die ermittelte Bewegungsgeschwindigkeit der Arbeitsvorrichtung (2) kleiner einem vorbestimmten Schwellwert liegt.

6. System (100) nach einem der voranstehenden Ansprüche, wobei die Sensoreinrichtung (3) zumindest einen Beschleunigungssensor (31) und/oder einen optischen Sensor (32) aufweist.

7. System (100) nach Anspruch 6, wobei der optische Sensor ein bildgebender Sensor (32), insbesondere ein CMOS-Sensor, einer Kamera der Arbeitsvorrichtung (2) ist, wobei der optische Sensor dazu eingerichtet ist, Bilddaten als Sensordaten auszugeben, und wobei die Steuerungsvorrichtung (6) dazu eingerichtet ist, die Bewegungsrichtung (X1, X2) anhand der vom bildgebenden Sensor ausgegebenen Bilddaten zu ermitteln.

8. System (100) nach Anspruch 6, wobei die Sensoreinrichtung (3) eine Lichtquelle (33) aufweist, wobei der optische Sensor (32) dazu ausgebildet ist, anhand von Licht, das von der Lichtquelle (33) emittiert und von der Rohrleitung reflektiert wird, Bilddaten eines abstrahierten Bildes auszugeben, und wobei die Steuerungsvorrichtung (6) dazu eingerichtet ist, die Bewegungsrichtung anhand der Bilddaten zu ermitteln.

9. System (100) nach einem der voranstehenden Ansprüche, wobei die Steuerungsvorrichtung (6) in der Arbeitsvorrichtung (2) integriert ist, oder die Steuerungsvorrichtung (6) separat von der Arbeitsvorrichtung (2) ausgebildet ist.

10. System (100) nach einem der voranstehenden Ansprüche, wobei die Steuerungsvorrichtung (6) drahtgebunden, insbesondere anhand eines Datenbusses, oder drahtlos mit der Sensoreinrichtung (3) und/oder dem Motor (5) verbunden ist.

11. System (100) nach einem der voranstehenden Ansprüche, wobei die Steuerungsvorrichtung (6) einen Prozessor (60) und einen Datenspeicher (61) umfasst, welcher durch den Prozessor (60) lesbar ist und eine Software speichert, die durch den Prozessor (60) ausführbar ist, um das erste und optional das zweite und/oder das dritte Steuersignal auszugeben.

12. System (100) nach einem der voranstehenden Ansprüche, wobei der Schlauch (1) zur Durchleitung eines Arbeitsfluids ausgebildet ist, und wobei die Arbeitsvorrichtung (2) Düsen (20) zum Ausstoßen des Arbeitsfluids aufweist.

13. System (100) nach Anspruch 12, wobei die Düsen (20) der Arbeitsvorrichtung (2) derart ausgerichtet sind, dass durch Ausstoßen des Arbeitsfluids eine entgegen der ersten Bewegungsrichtung (X1) gerichtete Kraft auf der Arbeitsvorrichtung (2) aufgebracht wird.

14. Verfahren (M) zum Inspizieren und/oder Reinigen einer Rohrleitung (D), insbesondere mithilfe eines Systems (100) nach einem der voranstehenden Ansprüche, umfassend:
Einführen (M1) einer an einem Ende (1A) eines Schlauchs (1) angebrachten Arbeitsvorrichtung (2) in die Rohrleitung (D), wobei der Schlauch (1) von einer Schlauchtrommel (4) abgewickelt wird;
Reinigen und/oder Inspizieren (M2) der Rohrleitung (D) mittels der Arbeitsvorrichtung (2);
Erfassen (M3) einer Bewegungsrichtung der Arbeitsvorrichtung (2) mittels einer Sensoreinrichtung (3) der Arbeitsvorrichtung (2);
Ändern (M4) einer Bewegungsrichtung der Arbeitsvorrichtung (2), um den Schlauch (1) mit der Arbeitsvorrichtung (2) in einer ersten Bewegungsrichtung (X1) aus der Rohrleitung (D) herauszuziehen; und
Automatisches Drehen (M5) der Schlauchtrommel (4) mittels eines Motors (5) derart, dass der Schlauch (1) auf die Schlauchtrommel (4) aufgewickelt wird, um die Arbeitsvorrichtung (2) und den Schlauch (1) aus der Rohrleitung (D) herauszuziehen, wenn die Sensoreinrichtung (3) als Bewegungsrichtung die erste Bewegungsrichtung (X1) erfasst.
